Europäisches Patentamt

(19) European Patent Office

Office européen des brevets

(11) Publication number: **0 031 622**
**A1**

(12) # EUROPEAN PATENT APPLICATION

(21) Application number: **80201215.3**

(22) Date of filing: **19.12.80**

(51) Int. Cl.³: **A 23 L 1/30**, A 23 J 3/00

(30) Priority: **31.12.79 US 108729**

(43) Date of publication of application: **08.07.81**
**Bulletin 81/27**

(84) Designated Contracting States: **DE FR GB IT**

(71) Applicant: **THE PROCTER & GAMBLE COMPANY,**
**301 East Sixth Street, Cincinnati Ohio 45202 (US)**

(72) Inventor: **Hager, Douglas Francis, 5419 Eastgate Blvd.,**
**Fairfield Ohio (US)**

(74) Representative: **Brooks, Maxim Courtney et al, Procter &**
**Gamble (NTC) Limited Whitley Road Longbenton,**
**Newcastle-upon-Tyne NE12 9TS (GB)**

(54) **Meat analog binder composition and use thereof in making shaped protein food products.**

㊅ Treatment of soy protein with a cation exchange resin greatly enhances the aqueous solubility of the protein without altering the native distribution of protein molecular weights. The resulting protein, in solutions of at least 20% by weight, provides a high quality, soy protein-based meat analog binder which binds at relatively low temperatures, generally above about 55°C but less than 80°C. The binder can be incorporated in shaped, textured protein food products, formed by coating or mixing particulate textured protein material with the binder, shaping the coated particulate material into a unitary shaped product, and heating the shaped product to heat set the binder.

EP 0 031 622 A1

COMPLETE DOCUMENT

# MEAT ANALOG BINDER COMPOSITION AND USE THEREOF IN MAKING SHAPED PROTEIN FOOD PRODUCTS

Heretofore, much work has been done to provide satisfactory meat analog food products. Meat analogs, or simulated meats, are generally formed from texturized vegetable protein. Texturized proteins are obtained by known methods in the form of particles, for example, fiber pieces, fibrous extrudate filaments, or granules. These particles must be bound together to form shaped meat analog products, for example, beef chunk analogs, chicken analogs, hamburger patty analogs, sausage analogs and meat loaf analogs. To hold these particles together, a suitable binder is required.

To be acceptable, a binder must have at least the following characteristics. It must present a reasonably bland or meat-compatible taste. It must bind effectively. It must heat set under mild conditions which will not adversely affect the protein particles. It must provide a product with an acceptable meat-like texture and mouthfeel when heat set.

Heretofore, most suitable binding materials for meat analog products and natural extended meat products such as meat loaves and croquettes have involved the use of albumen (egg white). Albumen is an excellent binding material. It heat sets under normal cooking conditions, has the highest possible protein efficiency ratio (PER), 3.2, and has its familiar texture and flavor characteristics. However, alternative demands and a limited supply for albumen limit its usefulness as a meat analog binder, both from a cost standpoint and in terms of availability.

A preferred binder would be one derived from an abundantly available vegetable source. Soybean protein is a material which is in abundant supply, and which has been proposed for use in meat analog binders. The prior art discloses, for example, the use of 7S soybean protein isolate as a meat analog binder which does not require adjuvant use of albumen. However, native soybean protein requires extensive processing to extract the 7S isolate component. Moreover, known heat and/or alkali processing techniques employed in refining soy protein to provide binders alter the structure of the protein, thereby degrading its nutritional value, so that the PER is reduced.

Theoretical analyses have shown that a 30% aqueous solution of soy protein is too dilute to form a stable gel unless the protein is partially denatured. Viscosity and NMR linewidth studies have indicated that soy protein isolates at concentrations above 20% should denature sufficiently at 65°C (standard cooking temperature) to allow stable gel formation. However, prior to the present invention, native soy protein solutions and mixtures known to the art gelled poorly and irreproducibly under these conditions.

Native soy protein, which is "nonfunctional" as a binder, distributes itself nonuniformly in a 30% aqueous mixture, forming "islands" of protein rich material (which set when heated) surrounded by a "sea" of much less concentrated protein solution. This sea is too dilute to form a macroscopic gel. Such materials do become functional at substantially higher temperatures, in the region of 85°C, by dissolving the islands of protein in the solution at the higher temperature. The problem with such high-temperature-binding materials is that they do not readily lend themselves to use in consumer products, since typical meat analog products, when heated to interior temperatures of 85°C by typical consumer cooking techniques, such as frying, have sufficiently high exterior temperatures to cause burning of the surface of the product.

It has now been discovered that, when the aqueous solubility of soy protein is enhanced via treatment with a cation-exchange resin, solutions can be produced containing soy protein at concentrations in excess of 20% by weight. It has also been discovered that solutions containing at least about 20% cation-exchange treated soy protein by weight will gel at relatively low temperatures ($>$ about $55^{o}$C), with gel strengths sufficient to bind textured protein particles in meat analog products. The critical concentration of protein required for gelation under such conditions is in the concentration range in which protein-protein overlap (of hydrodynamic molecular boundaries) would occur in a uniform protein solution. However, as indicated above, recognition of these principles, and, more importantly, obtaining this molecular overlap uniformly throughout the binder solution, have, until the present invention, escaped the grasp of workers in the art.

The present invention provides a soy protein-based meat analog binder which can be made from virtually any soybean protein starting material.

The present invention also provides the significant advantage of a soy protein-based meat analog binder which binds at relatively low temperatures, generally above about $55^{o}$C but less than about $80^{o}$C.

This invention also provides a binder material having greater viscosity than other binders at similar concentrations. This reduces the flow of binder to the outside of the meat analog product during cooking. Binder which accumulates at the surface of the product forms an undesirable crust when heated. This crust formation is significantly reduced by the binder of the present invention.

Importantly, the soy protein meat analog binder of the present invention retains the native distribution of protein molecular weights; that is, no degradation of the native protein structure occurs in the preparation of the soy protein meat analog binder provided herein. Many prior art processes solubilize soy proteins by degrading the 7S and 11S components to 2-3S fragments. Now, by the present invention, high molecular weight storage proteins can be solubilized without breaking them into subunits. This technique allows meat analog products having improved PER's to be produced.

## BACKGROUND ART

Cation exchange resins have been used in the past to obtain highly refined vegetable protein from oil-free vegetable seeds in liquid/solid/resin and liquid/solid systems. See especially, U.S. Patent 3,099,649, issued July 30, 1963 to Y. Kawamura et al.

The use of certain types of soy proteins in meat analog binders is also known. See, for example, U.S. 3,953,611, issued April 27, 1976 to R. W. Youngquist. Youngquist describes the use of the 7S fraction of soybean protein isolate to produce a heat-settable, edible binder for meat analog products.

The disclosures of the foregoing patents are incorporated herein by reference.

-5-

## DISCLOSURE OF THE INVENTION

The present invention provides a low temperature meat analog binder comprising an aqueous solution of at least 20% by weight of cation exchange treated soy protein having a protein molecular weight distribution essentially identical to that of native soy protein, said solution being heat-settable at a temperature greater than about 55°C but less than about 80°C, to form a gel having a Young's Modulus of least about $2.5 \times 10^5$.

Aqueous solutions containing 20% or more of the ion exchange treated protein prepared in the foregoing manner can be gelled at about 55°C and above. The relationship between gel temperature and concentration is set forth in the following table.

| T (°C) | Min. Protein Conc. for Gelation |
|--------|-------------------------------|
| 50 | 65% |
| 55 | 45% |
| 65 | 20% |
| 75 | 13% |
| 85 | 11.8% |
| 95 | 10.8% |

The resulting gel has a characteristic Young's Modulus, tensile strength, and % elongation at rupture, which compares quite favorably with other, art-disclosed binder materials, as seen from the following table.

| System | Young's Modulus† (dyne/cm$^2$) | Tensile Strength† (dyne/cm$^2$) | % Elongation† at Rupture |
|---|---|---|---|
| Range for all soy isolates which gel | $0.7 - 5 \times 10^5$ | $0.8 - 8.0 \times 10^4$ | 110 - 350 |
| Albumen* | $3 - 4 \times 10^5$ | $5 - 10 \times 10^4$ | 148 - 220 |
| Alkaline-heat-modified isolate* | $2.6 - 3.0 \times 10^5$ | $3.7 - 5.7 \times 10^4$ | 130 |
| Heat modified Edi-Pro™ N* | $1.8 - 2.0 \times 10^5$ | $2.2 - 6.7 \times 10^4$ | 110 - 180 |
| Cation exchange-treated soy isolate* (Present Invention) | $4.1 - 5.0 \times 10^5$ | $5.1 - 8.2 \times 10^4$ | 235 - 348 |

* All gels were set at 67°C for 30 minutes; the solids concentration was 30%.

† Strain rate = .021 cm/sec.

In general, gels with Young's Modulus, tensile strength, and % elongation at rupture values in about the same range as those of albumen function well as binders. Such physical properties will vary somewhat, depending upon time and temperature of gelling, % protein (solids) in the binder solution of the present invention, and like factors, as set forth in the following table.

| T (°C) | Young's Modulus (dyne/cm$^2$) |
|---|---|
| 50 | 0 |
| 55 | $5.6 \times 10^4$ |
| 60 | $2.2 \times 10^5$ |
| 65 | $5.0 \times 10^5$ |
| 75 | $8.9 \times 10^5$ |
| 80 | $1.2 \times 10^6$ |

$C_{protein} = 30\%$ (w/w)
Time for gelation = 30 min.

This invention also provides new shaped textured protein food products formed by a process comprising the steps of (1) coating or mixing particulate textured protein material with a binder comprising an aqueous solution containing at least about 20% by weight of cation exchange treated soybean protein; (2) shaping the coated particulate material into a unitary shaped product; and (3) heating the shaped product to heat-set the binder. The product of this process is a novel shaped protein food product comprising particulate textured protein particles bound together by heat-set cation exchange treated soybean protein, in which the soybean binder has a protein molecular weight distribution essentially identical to that of native soy protein.

As used herein "particulate textured protein material" means a plurality of edible protein particles which have a hydration capacity of from about 1 to 4 times their weight of water, and when hydrated remain particulate (maintain their structural integrity) and have a chewy texture characteristic of meat.

The term "chewy texture" refers to and includes the physical characteristic of the protein material which causes such materials when chewed in the mouth to present the meat-like properties of resilience, elasticity and resistance to shear. This chewy texture is preferably evaluated subjectively by chewing the protein; however, this texture of the protein material can be expressed in "shear press" values. Suitable textured protein material for use herein includes protein material having a shear press value in the range of 300 to 1500 pounds, determined according to the method disclosed in U.S. Pat. No. 3,778,522, granted Dec. 11, 1973, to Strommer, the disclosures of which are incorporated herein by reference.

The term "hydration capacity" as used herein refers to the total amount of water the dry protein material is able to hold and is determined by soaking dry textured protein particles in excess water for 30 minutes and then draining for 5 minutes. The hydration capacity is the weight of water retained per unit weight of the dry protein material.

The term "shaping" as used herein refers to any physical operation, such as molding and pressing, which causes a plurality of particulate textured protein particles to be aggregated to form a unit and to conform to a particular configuration.

Suitable particulate textured protein materials for use herein can consist of from 30 to 100% protein, on a dry weight basis, and from 0 to 70% materials associated with the protein source material or added adjuvant materials. Preferably, the protein particles consist of 50 to 100% protein, and most preferably 50 to 80% protein on a dry weight basis. Examples of adjuvant materials are carbohydrates, amino acid derivatives which improve the PER of the protein, such as N-acyl-L-methionine ("NALM"), vitamins, and flavors, etc. In this regard, a "nutritive amount" of NALM is used herein to mean an amount of NALM sufficient to increase significantly the PER of the protein to which it is added; see U.S. Patents 3,952,115 and 3,878,305, which are incorporated herein by reference.

The size and shape of the particulate textured protein material is not a critical aspect of this invention and can be selected to achieve the product characteristics desired. The particulate protein material is preferably fibrous (extruded) since this protein material can be formed into very desirable fibrous meat analog food products.

Meat is an example of textured protein material. It is important to note, however, that proteins which are not textured can be texturized to form textured protein. These texturized proteins are preferred for use herein.

For example, soybean meal and other vegetable sources can be processed in known manner to remove carbohydrates and obtain products with higher levels of protein, for example, soy protein concentrates containing about 70% protein or soy protein isolates containing about 90% or more protein. In turn, a variety of suitable prior art processes can be employed to convert the soybean meal, concentrate, isolate and other edible protein bearing materials into suitable texturized particulate protein materials.

Suitable methods for converting a wide variety of untextured animal and vegetable protein-bearing materials into particulate textured proteins are disclosed, for example, in U.S. Pat. No. 2,682,466, granted June 29, 1954, to Boyer; U.S. Pat. No. 3,142,571, granted July 28, 1964, to Kitchel; U.S. Pat. No. 3,488,770 granted Jan. 6, 1970, to Atkinson; U.S. Pat. No. 3,498,794 granted Mar. 3, 1970, to Calvert, et al.; U.S. Pat. No. 3,759,715 granted Sept. 18, 1973, to Loepiktie, et al.; U.S. Pat. No. 3,778,522 granted Dec. 11, 1973, to Strommer; U.S. Pat. No. 3,794,731 granted Feb. 26, 1974, to Dannert, et al.; U.S. Pat. No. 3,814,823 granted June 4, 1974, to Yang, et al.; and U.S. Pat. No. 3,840,679, granted Oct. 8, 1974, to Liepa, et al.; all said patents being incorporated herein by reference.

0031622

## BEST MODE

The cation exchange resin-treated soy protein of this invention is prepared by the following process: soy protein isolate or soy protein bodies are dispersed in water at a concentration of 1 to 5% protein (weight/volume). High shear mixing is generally used to prepare a stable dispersion. An amount of a phosphonic acid cation exchange resin, BIOREX™ 63 (in $Na^+$ or $K^+$ form) equal in weight to the protein is added to the dispersion. The pH of the dispersion is then adjusted to about pH 9.5. The slurry is mixed at room temperature for 1-4 hours. After mixing, the dispersion is centrifuged to remove the ion exchange resin and any undissolved protein from the liquid. The liquid is decanted, and its pH is adjusted to pH 7.00. This liquid is then dried, preferably by freeze-drying. The resulting product is reconstituted as needed to an aqueous solution containing at least about 20%, preferably about 30%, of the protein by weight, and applied to textured proteins in forming meat analog products, as described hereinafter.

In forming many desirable food products within the scope of this invention, it will be preferred to use particulate textured protein materials which have physical characteristics which meet proposed USDA-FNS specification for textured meat alternatives set forth in the Federal Register, Vol. 39, p. 11,297, dated Mar. 27, 1974.

The most suitable particulate textured proteins are protein fibers with a cross-section of from about 20 to about 500 microns. The fibers can be in form of a fiber bundle (tow) comprised of numerous fibrous filaments having a substantially larger cross-section. Especially suitable particulate proteins are fibrous cellular texturized proteins formed by expansion, for example, texturized proteins formed by extrusion, as mentioned hereinbefore.

The binder is employed in an amount sufficient to provide a food product bound together to the desired extent after a heat-setting step. The particular amount of binder most suitably employed will, of necessity, vary somewhat with the particular food product formulated. In general, the ratio (dry weight basis) of binder to particulate protein will be in the range of from about 1:1 to 1:10, and more preferably from about 1:2 to 1:8. Real or analog meat patties, meat loaves, and meat balls require a lesser degree of binding, and hence less binder can be employed; whereas analog meat chunks require a higher degree of binding, and hence more binder, to achieve the toughness associated with the mouthfeel of beef chunks.

Preferably, the particulate textured protein material to be coated with the binder is hydrated with 1 to 3 times its dry weight of water. While it is preferred that both the particulate protein be moistened and the binder be in aqueous solution prior to mixing, the materials can be mixed together in dry form prior to adding the required water.

The textured particulate protein material coated with a suitable amount of binder is then shaped into unitary food products, for example, real or analog meat patties, meat loaves, meat balls or meat chunks or slabs. The shaping can be done by hand, or suitable molds, forms, presses, or converging conveyor belts can be employed. Preferably, the products are shaped to resemble familiar meat products, for example, hamburger patties, meat balls, pork chops, veal cutlets, or beef chunks.

These moist shaped unitary food products comprising the resin-treated binder, particulate protein and water are then heat-set to complete the binding process. In general, temperatures within the range of from $55^\circ$C to $230^\circ$C, preferably $65^\circ$ to $85^\circ$C, will suitably heat-set the binder. The time necessary to provide good heat-setting at a particular temperature will vary significantly depending on the temperature and thickness of the shaped protein product. A relatively thin patty can generally be heat-set in 2 to 30 minutes, whereas a thick product such as a meat loaf can require several hours.

Suitable heat-setting temperaures are attained in a variety of cooking operations; for example, baking, frying, or microwaving the shaped product will heat-set the binder satisfactorily.

- 12 -                    0031622

The resulting unitary shaped food product is a novel protein food product comprising a plurality of textured protein particles bound together by cation-exchange treated soybean protein. The product can be frozen or dehydrated and stored for later use. The dehydrated product can be re-hydrated to provide so-called "convenience" food products.

- 13 -

0031622

## INDUSTRIAL APPLICABILITY

The process by which the cation exchange treated soy protein binder is prepared can vary within rather broad limits without losing its principal advantages.

The starting material used to prepare cation exchange-treated soy protein can be protein isolate, protein bodies, protein concentrate or defatted protein meal. When the starting material is protein concentrate or defatted protein meal, an isoelectric precipitation step is used to isolate the protein product. In addition, when defatted protein meal is the starting material, an ethanol/water wash is used to remove sugars from the product. Commercial sources of protein isolates and concentrates use such processes, which are well-known in the art. When defatted, washed protein meal is the starting material, ion exchange processing times are preferably extended, typically to about four hours.

The protein concentration of the starting material as processed can vary from slightly greater than 0% to about 10% (weight protein/volume solution). This concentration refers to the concentration of the solution as used in the treatment with the exchange resin. It is to be understood that the concentration of protein in a solutions used as binders must be at least about 20% by weight, generally about 20% to about 65%.

The temperature used in the cation exchange resin treatment is not critical, and can be varied from about $0^{\circ}C$ to about $55^{\circ}C$ without significant effects on the final product. Too high a temperature can denature the protein.

While a neutral-to-alkaline pH is important during cation exchange processing, the pH within that range is not particularly critical, and can vary between about 7.0 and 11.0.

Treatment by a fixed column of resin can replace the batch treatment of the protein, to allow continuous processing. Any resin which can decompose neutral salts and adsorb cations can be used as the cation exchange resin. The resin can, in principle, have any acidic group; however, it must be in an alkali metal form. Cation exchange resins having a sulfonic acid radical as the functional group, for instance Amberlite™ IR-120, Dowex™ 50, Duolite™ C-25, Diaion™ SK #1, and Zeolex™ SA, etc., are suitable. Other cation exchange resins of complex type having a sulfonic acid radical as the main functional group such as, for example, Amberlite™ XE-111, and cation exchange resins having a phosphoric acid radical as the functional group, such as for example, Duolite™ C-61, and Permtit™ XP may also be used. Whether the cation exchange treatment is performed in a continuous or batch mode, the time of treatment can range from about 1/2 hour to about 24 hours. A useful endpoint for the ion exchange treatment is a $Ca^{++}$ level of about 30 ppm. and a $Mg^{++}$ level of about 20 ppm. in the eluate. The cation exchange resin may be used repeatedly after washing with saline.

When the cation exchange treatment is complete, any conventional method of concentrating or drying the resulting protein solution can be used, although freeze-drying is preferred. Of course, prolonged heating should be avoided in order to avoid prematurely heat-setting the solution or denaturing the protein as the concentration approaches 20%.

A variety of known techniques can be employed to coat the particulate textured protein material with the binder. For example, the binder can be sprayed or metered onto the textured protein paticles, or the binder and particles can be combined and mixed, for example, by tumbling the combination in an inclined rotating drum.

Suitable untextured proteins which can be texturized to form textured particulate protein materials are available from a variety of sources. The preferred source of such proteins is vegetable protein; however, animal protein can be employed. Examples of suitable animal proteins are casein and egg white. Examples of suitable vegetable protein sources are soybeans, safflower seed, corn, peanuts, wheat, peas, sunflower seed, cottonseed, coconut, rapeseed, sesame seed, leaf proteins, single cell proteins such as yeast, and the like. Generally, if the protein source is a vegetable protein, the protein is converted to a relatively pure form prior to use . Thus, for example, if the protein source is soybeans, the soybeans can be dehulled and solvent extracted, preferably with hexane, to remove the oil therefrom. The resulting oil-free soybean meal contains about 50% protein.

The food products of this invention will often contain additional ingredients to impart desirable taste and appearance characteristics to the product. The binder can often be a desirable carrier for these ingredients.

In this regard, the binder composition can often desirably include, in addition to the above-described binder ingredients, other edible ingredients such as flavoring agents, coloring agents, oils and fats and the like. For example, various meat flavors which are available commercially can be added. Representative thereof are bouillon cubes having chicken, beef and other meat flavors. Synthetic ham, bacon and sausage flavors can also be used. Additionally, various spices and salts can be employed to provide further flavor. The coloring agents may be dyes or other coloring materials which can simulate the color of meat.

Vegetable oils and animal fats and oils can also be added to the binder mixture. Representative thereof are soybean oil, cottonseed oil, corn oil, coconut oil, palm kernel oil, olive oil, peanut oil, sesame seed oil, safflower oil, tallow, lard, chicken fat, butter, cod-liver oil and the like. The oils and fats may be partially or fully hydrogenated.

A binder composition containing the cation exchanged protein, fat and flavor, for example, can be emulsified and the emulsion mixed with the particulate textured protein material to provide an even distribution of the binder, fat and flavoring agents. If desirable, an edible emulsifier can be employed to aid formation of such an emulsion. Representative of such emulsifiers are: mono- and diglycerides of fatty acids, such as monostearin, monopalmitin, monoolein, and dipalmitin; higher fatty acid esters of sugars, such as sucrose partial palmitate and sucrose partial oleate; phosphoric and sulfuric acid esters, such as dodecyl glyceryl ether sulfates and monostearin

0031622

phosphate, partial esters of glycerol and both higher and lower fatty acids, such as glyceryl lactopalmitate; and polyoxyalkylene ethers of fatty esters of polyhydric alcohols, such as the polyoxyethylene ethers of sorbitan monostearate and sorbitan distearate.

While the amount of the additional ingredients in proportion to the binder can vary over a wide range, the concentration of soy protein in the binder must remain at least about 20% by weight. Thus, the amount of these additional ingredients should not so dilute the binder that it becomes ineffective. In addition, intermediate levels (about 0.075 M to about 0.15 M) of alkali chlorides, such as NaCl and KCl, are preferably avoided, since these levels cause phase separation of the protein binder solution and inhibit gelling. Both higher and lower levels are acceptable. Of course, these salts may be added to other components of the total meat analog system without impairing the properties of the binder.

The following examples illustrate the broad range of industrial applicability of the present invention, without intending to be limiting thereof.

EXAMPLE I

To 380 grams of isoelectric precipitated soy protein isolate was added 3420 ml Talawanda™ distilled water. To this was added 190 grams 100-200 mesh Biorex 63 cation exchange resin (Na form). The resulting aqueous slurry was mixed 10 minutes with a Polytron Sonicating Mixer at the 6.5 setting. At this point, the pH of the slurry was 6.4. The pH of the slurry was adjusted to 9.5 with 50% sodium hydroxide, and stirred by a magnetic stirrer for 3 hours.

After stirring, the slurry was centrifuged at 1900 rpm in an IEC centrifuge for 10 minutes. The resulting supernatant was collected, and its pH was adjusted to 7.00. As the pH was lowered, some precipitation of protein was noted from the supernatant. The supernatant was then freeze-dried for about 12 hours.

After freeze-drying, 213.57 grams of total protein were recovered; yield 56.2%.

A particulate textured soy protein material is obtained by extruding a commercially available soy concentrate (containing about 70% protein) in known manner as follows:

Sixty-five parts soy concentrate are mixed with 35 parts water, and the pH of the mixture is adjusted to 5.8 with HCl.

The resulting composition is extruded in a Brabender Model 2503 extruder equipped with a medium compression (2:1) screw and an extrusion die containing a 3/16 inch diameter orifice. The extruder is maintained at a temperature of 175°C at the extrusion die and the front end of the barrel. The screw is rotated at a rate of 20 rpm.

The extruded product expands rapidly on emerging from the die while releasing steam. The resulting product is a fibrous protein filament. The filament is chopped into pieces having a length of about .1 inch. The fibrous protein filament product is dried in an over at 60°C for 7 hours to obtain a storage-stable product. When the dry product is added to water, it absorbs approximately three times its dry weight of water. The resulting hydrated product resembles loose cooked ground hamburger meat in appearance and texture, and is characterized as a hamburger analog.

A binder is formed by preparing a 33% solution of the protein product prepared above. (It is to be noted that the use of distilled water to prepare the protein solution is important to prevent re-association of hardness cations found in many industrial water supplies with the binder protein.) 14.6 parts of this binder are added to 31.4 parts of the fully hydrated hamburger analog and mixed together to coat the analog particles with the binder. Fifty grams of this mixture are pressed in a hamburger patty mold, and shaped into a circular patty having a diameter of 8.6 cm. and a thickness of 10 mm.

The shaped patty is then placed in a microwave oven and microwaved for 30 seconds (providing a temperature of about $65^{\circ}C$) to heat-set the binder.

The extruded protein particles are firmly bound together providing an all-vegetable protein food product which closely resembles a hamburger patty in appearance, handling characteristics and mouthfeel. The product is characterized as a hamburger patty analog. The patty has a suitably bland meat-compatible taste so that it can be flavored appropriately.

EXAMPLE II

Sixteen grams of the commercial soy protein isolate SUPRO™620 were mixed with 784 ml of distilled water, and mixed with a Polytron Sonicating Mixer at the highest setting for one minute. To the resulting slurry were added 16 grams Biorex 63 ion exchange resin (100-200 mesh). The pH was adjusted to 9.5 with 0.1 N NaOH and stirred further with a magnetic stirrer. At 1-1/2 hours, 8 grams Biorex 63 ion exchange resin (50-100 mesh) were added. Upon centrifugation for 10 minutes at 2000 g's, 2 protein fractions were distinguishable which could not be separated by decanting. The layers were separated by siphoning off the top layer. The top layer was found to contain 60% total solids, while the bottom layer was found to contain 40% total solids. The pH of both layers was adjusted to 7.0, and the two layers were mixed together and freeze-dried. 16.06 grams of freeze-dried protein material were recovered; yield: 100%.

A flavored hamburger patty analog is formed by combining the following ingredients:

| | | |
|---|---|---|
| Dry soy protein extrudate particles (Example I) | 20 | grams |
| Cation exchange treated SUPRO™620 | 5 | " |
| Flavor ingredients | 2.76 | " |
| Liquid soybean oil | 4.86 | " |
| Water (soft) | 40 | " |

All the ingredients are combined except the water and mixed together. The water is then added to this mixture. This mixture is allowed to stand for 10 minutes until the analog becomes hydrated.

The binder is formed in situ. The resulting mixture can be lightly mixed by hand.

This mixture is then formed by hand into a circular patty shape having a diameter of about 7.6 cm. and a thickness of about 10 mm. The patty is then placed in a microwave oven and microwaved for 45 seconds (providing a temperature of about

70°C) to heat-set the binder.

The extruded protein particles are firmly bound together providing an all vegetable protein food product which closely resembles a hamburger patty in appearance, taste, and mouthfeel. It is characterized as a hamburger patty analog.

This hamburger patty analog can be dehydrated to provide a storage stable product. The dehydrated product can be rehydrated for use when desired.

EXAMPLE III

The freeze-dried material of Example I is re-treated in the following manner.

25 grams of the material prepared according to Example I are mixed with 1225 ml $H_2O$ and stirred for one minute with a Polytron Sonicating Mixer at maximum setting. To the resulting 2% soy slurry are added 25 grams Biorex 63 ion exchange resin (100-200 mesh) and the pH is adjusted to 9.5. The resulting composition is stirred for 4 hours by magnetic stirrer at $19^{\circ}C$, and the pH is adjusted periodically to 9.5 with 0.1 N NaOH. After stirring, the mixture is centrifuged at 1800 rpm for 10 minutes in an IEC centrifuge. The supernatant is collected, and the precipitate discarded. The pH of the supernatant fluid is adjusted to 7.00. No precipitation was observed. The resulting material was placed in a freeze-drier for about a week. 24.48 grams of protein are recovered after freeze-drying; yield: 98%. This protein forms a nearly clear solution at a weight concentration of 20%, while the parent isolate (the starting material of Example I) forms a clear solution only at concentrations of less than 2% protein. The sedimentation pattern for the cation exchanged protein product shows approximately equal parts of 2S, 7S and 11S components, very similar to the pattern of normal, untreated soy protein isolates.

0031622

EXAMPLE IV

A particulate textured soy protein material is prepared as in Example I. These granules are hydrated with 3 parts water to 1 part granules. The cation exchange treated soy protein product of Example III is added to distilled water to prepare a 65% solution. On a solids basis, a sufficient amount of this solution was added to the granules to provide 10% binder and 90% granules on a solids basis. The soy binder solution, when added to the granules, is significantly more viscous than, for example, egg white solid or meat solubles binders. This difference can be minimized if the binder solution is added to the water used to hydrate the granules.

The resulting mixture is formed into patties of a size and shape typical of hamburger patties. The patties are cooked for 30 seconds at the highest setting in a microwave oven. This cooking raised the interior temperature of the patty to about 65°C. Natural ground beef patties require about 45 seconds to bind under similar conditions.

0031622

## EXAMPLE V

When in Example IV, the shaped patties are fried at $115^{\circ}C$ for 2 minutes on each side to heat-set the shaped patties, a very desirable heat-set hamburger patty analog product is obtained. A patty-center temperature of $65^{\circ}C$, sufficient to heat-set the binder, is easily reached without burning the exterior of the patty. By contrast, patties made with binders which heat set at temperatures above about $80^{\circ}C$ will be badly burned on the outside before the center is hot enough to heat-set the binder.

0031622

## EXAMPLE VI

A meat analog product is made according to the following formulation and procedure.

| Component | Parts by Weight |
|---|---|
| Soybean Concentrate (70% Protein) | 60.0 |
| Water | 40.0 |
| N-acetyl-L-methionine | 1.8 |
| Fat | 10.0 |
| Cation Exchange Treated Soy Protein (Ex. I) | 10.0 |
| Beef Extract Flavoring | 5.0 |
| Food Coloring and Salt | — |

The components are blended to form a dough, which is passed through a three-fourth inch Brabender extruder using a temperature in the extruder of $150^{o}C$. A pressure of approximately 450 psi develops within the extruder and forces a cylindrical product from the 4 mm. exit die. The extruded product is dried and ground to particle sizes having an average diameter of one-fourth inch. When the product is hydrated and shaped into a meat loaf and baked for 1 1/2 hours at $185^{o}C$, the resulting product is a firm, heat-set meat loaf analog of desirable flavor and texture.

Where in Example II, the N-acetyl L-methionine is replaced by a nutritionally equivalent amount of either: N-formyl L-methionine, N-propionoyl L-methionine, N-stearoyl L-methionine, N-palmitoyl L-methionine, N-linolenoyl L-methionine, N,N'-dilauroyl L-cystine, N,N'-dipalmitoyl L-cystine, N,N'-diolcoyl L-cystine, N-linolenoyl L-cysteine, N-enanthoyl L-cysteine, N-propionoyl L-cysteine, respectively, equivalent results are secured.

EXAMPLE VII

500 kg of isoelectric precipitated soy protein isolate is charged in an extraction vessel, which is connected through a pump to a column containing 400 kg of Amberlite™ IR 120 cation exchange resin. After adding 5000 liters of distilled water, the pump is operated to circulate the liquid at a rate of 300 liters per minute. Sodium hydroxide is added to maintain the circulating fluid at a pH of 9.5. After 5 hours of continuous circulation, the $Ca^{++}$ and $Mg^{++}$ levels become nearly constant, and the system can then be operated in continuous fashion. The resulting eluate is spray-dried by heating to $60^{o}C$ and spraying into a vacuum chamber, using techniques and equipment commonly used in the food arts. The resulting product, when reconstituted to concentrations of at least 20% by weight, provides an excellent meat analog binder for use in commercial food processing.

CLAIMS

1. A low temperature meat analog binder composition characterized by an aqueous solution of at least 20% by weight of cation-exchange treated soy protein having a protein molecular weight distribution essentially identical to that of native soy protein; said solution being heat settable at a temperature greater than about 55$^{\circ}$C, to form a gel having a Young's Modulus of at least 2.5 x 10$^5$ dyne/cm$^2$.

2. A binder according to Claim 1 characterized in that it has a Young's Modulus of about 3.5 x 10$^5$ when gelled.

3. A binder according to Claim 1 or 2 characterised in that is comprises about 30% by weight of soy protein.

4. A binder according to any of Claims 1 to 3 characterized in that the soy protein is selected from the group consisting of an ethanol/water-washed isoelectric precipitate of defatted soy meal, an isoelectric precipitate of soy protein concentrate, soy protein bodies, and soy protein isolate, and mixtures thereof.

5. A binder according to any of Claims 1 to 4 characterized in that the aqueous solution is heat settable at a temperature in the range from 65$^{\circ}$C to 80$^{\circ}$C.

6. A process for forming textured shaped protein food products characterized by:

   a. coating particulate textured protein material with a low temperature meat analog binder composition according to any of Claims 1 to 5,
   b. shaping the coated particulate material into a unitary shaped product; and
   c. heating the shaped product to heat-set the binder.

0031622

7. A process according to Claim 6 characterised in that the particulate textured protein material is coated with an amount of binder providing a ratio of binder to particulate textured protein material of from 1:1 to 1:10 on a dry weight basis.

8. A process according to Claim 6 or 7 characterised in that the shaped protein product is heated to a temperature of at least 55°C to heat-set the binder.

9. A process according to Claim 6, 7 or 8 characterised in that the particulate textured protein material is hydrated with from 1 to 3 times its dry weight of water.

10. A shaped protein food product comprising edible textured protein particles bound together by a low temperature meat analog binder composition according to any of Claims 1 to 5.

European Patent Office

EUROPEAN SEARCH REPORT

003.1622

EP 80 20 1215.3

## DOCUMENTS CONSIDERED TO BE RELEVANT

| Category | Citation of document with indication, where appropriate, of relevant passages | Relevant to claim |
|---|---|---|
| X | DE - A1 - 2 718 046 (VISCOSE GROUP LTD.)<br>* claims 1, 2, 11, 24 *<br>-- | 1 |
| D | US - A- 3 814 823 (PROCTER & GAMBLE CO.)<br>* complete document *<br>-- | |
| D | US - A - 3 952 115 (PROCTER & GAMBLE CO.)<br>* complete document *<br>-- | |
| A | DE - A1 - 2 635 318 (GENERAL FOODS CORP.)<br>* complete document *<br>-- | |
| A | US - A - 3 914 443 (NISSHIN OIL MILLS LTD.)<br>* complete document *<br>-- | |
| A | US - A - 4 000 323 (PROCTER & GAMBLE CO.)<br>* complete document *<br>---- | |

**CLASSIFICATION OF THE APPLICATION (Int. Cl.3)**

A 23 L    1/30
A 23 J    3/00

**TECHNICAL FIELDS SEARCHED (Int. Cl.3)**

A 23 J    3/00
A 23 L    1/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 06-03-1981 | SCHULTZE |

EPO Form 1503.1  06.78